# EUROPEAN PATENT APPLICATION

(11) **EP 4 722 937 A1**
(43) Date of publication of application: **08.04.2026**
(21) Application number: 24853287.1
(22) Date of filing: 20.05.2024
(51) Int. Cl.: G06F 16/21

(54) **DATABASE MANAGEMENT METHOD AND APPARATUS**

(30) Priority: 14.08.2023 CN 202311024253
(71) Applicant: Jingdong Technology Information Technology Co., Ltd., Beijing 100176 (CN)
(72) Inventor: ZHANG, Junjie, Beijing 100176 (CN)
(74) Representative: Böckmann genannt Dallmeyer, Georg Nikolas
(86) International application number: PCT/CN2024/094216
(87) International publication number: WO 2025/035872

(57) **Abstract**

Provided in the embodiments of the present disclosure are a database management method and apparatus. The database management method comprises: first, acquiring, based on a current time, first incremental data of a database and a metadata list of the first incremental data; then, determining, based on the first incremental data, whether the database meets upscaling conditions; next, in response to determining that the database meets the upscaling conditions, executing a data validation on the first incremental data according to the metadata list to obtain validated incremental data; and finally, executing a data migration on the validated incremental data based on a new database and the database to complete database upscaling management.

## Description

### CROSS-REFERENCE TO RELATED APPLICATIONS

This patent application claims the priority to Chinese Patent Application No. 202311024253.8, titled "Database Management Method and Apparatus", filed on August 14, 2023. The content of the aforementioned application is incorporated herein by reference in its entirety.

### TECHNICAL FIELD

The embodiments of the present disclosure relate to the field of computer technology and the field of database storage technology, particularly to a database management method and apparatus.

### BACKGROUND

Currently, most database products possess elastic scalability capabilities, i.e., the ability to scale up or down. In distributed scenarios, this typically involves resharding logic, where databases must redistribute data during scaling operations. This process requires significant workloads and causes substantial performance degradation, and is typically handled through system downtime.

The inventors have discovered that current database upscaling and downscaling operations are primarily manually performed by operations personnel, with no visibility into the specific data distribution patterns of a current machine. In complex sharding scenarios, these upscaling and downscaling operations consume massive physical resources, potentially leading to online service disruptions due to inaccurate time estimation by operations personnel.

### SUMMARY

The embodiments of the present disclosure provide a database management method, a database management apparatus, an electronic device, and a computer-readable medium.

In one or more embodiments, a database management method is provided, the method comprising: acquiring, based on a current time, first incremental data of a database and a metadata list of the first incremental data; determining, based on the first incremental data, whether the database meets upscaling conditions; in response to determining that the database meets the upscaling conditions, executing a data validation on the first incremental data according to the metadata list to obtain validated incremental data; and executing a data migration on the validated incremental data based on a new database and the database to complete database upscaling management

In one or more embodiments, a database management apparatus is provided, the apparatus comprising: an acquisition module configured to acquire, based on a current time, first incremental data of a database and a metadata list of the first incremental data; a determination module configured to determine, based on the first incremental data, whether the database meets upscaling conditions; a validation module configured to, in response to determining that the database meets the upscaling conditions, execute a data migration on the first incremental data according to the metadata list to obtain validated incremental data; and an upscaling module configured to execute data migration on the validated incremental data based on a new database and the database to complete database upscaling management.

In one or more embodiments, an electronic device is provided, the device comprising: one or more processors; and a storage device for storing one or more programs, when executed by the one or more processors, the one or more programs cause the one or more processors to implement the database management method described in any embodiment of the first aspect.

In one or more embodiments, a non-transitory computer-readable medium is provided, storing a computer program, the computer program, when executed by a processor, implements the database management method described in any embodiment of the first aspect.

It should be understood that the content described in this section is not intended to indicate key or essential features of the embodiments of the present disclosure, nor is it used to limit the scope of the present disclosure. Other features of the present disclosure will become readily apparent from the following description.

### BRIEF DESCRIPTION OF THE DRAWINGS

Through the detailed description of non-limiting embodiments with reference to the following drawings, other features, objectives, and advantages of the present disclosure will become more apparent:
FIG. 1 is an example system architecture diagram illustrating an environment in which an embodiment of the present disclosure may be applied.
FIG. 2 is a flowchart of a database management method according to an embodiment of the present disclosure.
FIG. 3 is a flowchart of a data migration process for validated incremental data according to an embodiment of the present disclosure.
FIG. 4 is a flowchart of a database upscaling management process according to an embodiment of the present disclosure.
FIG. 5 is a flowchart of a database downscaling management process according to an embodiment of the present disclosure.
FIG. 6 is a flowchart of a database upscaling or downscaling management process according to an embodiment of the present disclosure.
FIG. 7 is a structural diagram of a database management apparatus according to an embodiment of the present disclosure.
FIG. 8 is a structural schematic of an electronic device suitable for implementing an embodiment of the present disclosure.

### DETAILED DESCRIPTION

Further detailed explanations of the present disclosure will be provided below in conjunction with the accompanying drawings and embodiments. It should be understood that the specific embodiments described herein are merely for illustrating the relevant disclosure and are not intended to limit the scope of the present disclosure. Additionally, it should be noted that for clarity, the drawings depict only portions relevant to the disclosure.

It should be noted that in the absence of conflict, the embodiments and features of the embodiments in the present disclosure may be combined with each other. The present disclosure will be described in detail below with reference to the drawings and embodiments.

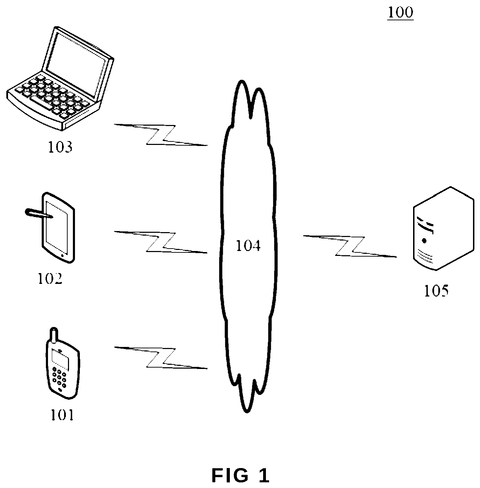

FIG. 1 shows an example system architecture 100 that can be applied with the database management method or database management apparatus of the present disclosure.

As shown in FIG. 1, system architecture 100 may comprise terminal devices 101, 102, 103, network 104, and server 105. Network 104 serves as a medium to provide communication links between terminal devices 101, 102, 103 and server 105. Network 104 may include various connection types, such as wired or wireless communication links, fiber optic cables, and so on.

Users may interact with server 105 through network 104 using terminal devices 101, 102, 103 to receive or send messages, etc. Terminal devices 101, 102, 103 may be user-end devices with installed client applications, such as e-commerce platform applications, image-based applications, video-based applications, search applications, financial applications, etc.

Terminal devices 101, 102, and 103 can be various electronic devices with display screens and capable of receiving server messages, including but not limited to smart phones, tablet computers, e-book readers, electronic players, laptops, desktop computers, etc.

Terminal devices 101, 102, 103 may be hardware or software. When implemented as hardware, they may include various electronic devices. When implemented as software, they may be installed in the aforementioned electronic devices. They can be realized as multiple software or software modules (e.g., multiple software modules for distributed services) or as a single software or software module. No specific limitations are imposed in this regard.

Server 105 may be a server providing various services, such as a backend server receiving requests from terminal devices with which it establishes communication. The backend server can receive and analyze requests from terminal devices and generate processing results.

Server 105 may acquire the first incremental data of a database and a metadata list of the first incremental data based on the current time. It then determines whether the database meets upscaling conditions based on the first incremental data. Then in response to determining that the database meets the upscaling conditions, it executes a data validation on the first incremental data according to the metadata list to obtain validated incremental data. Finally, it executes the data migration on the validated incremental data based on a new database and the database to complete database upscaling management.

It should be noted that the server may be hardware or software. When implemented as hardware, it may be various electronic devices providing services to terminal devices. When implemented as software, it may be implemented as multiple software or software modules providing services to terminal devices or as a single software or software module. No specific limitations are imposed in this regard.

It should be noted that the database management method provided in the embodiments of the present disclosure may be executed by server 105. Correspondingly, the database management apparatus may be deployed within server 105.

It should be understood that the number of terminal devices, networks, and servers depicted in FIG. 1 is merely illustrative. Depending on implementation requirements, any number of terminal devices, networks, and servers may be included.

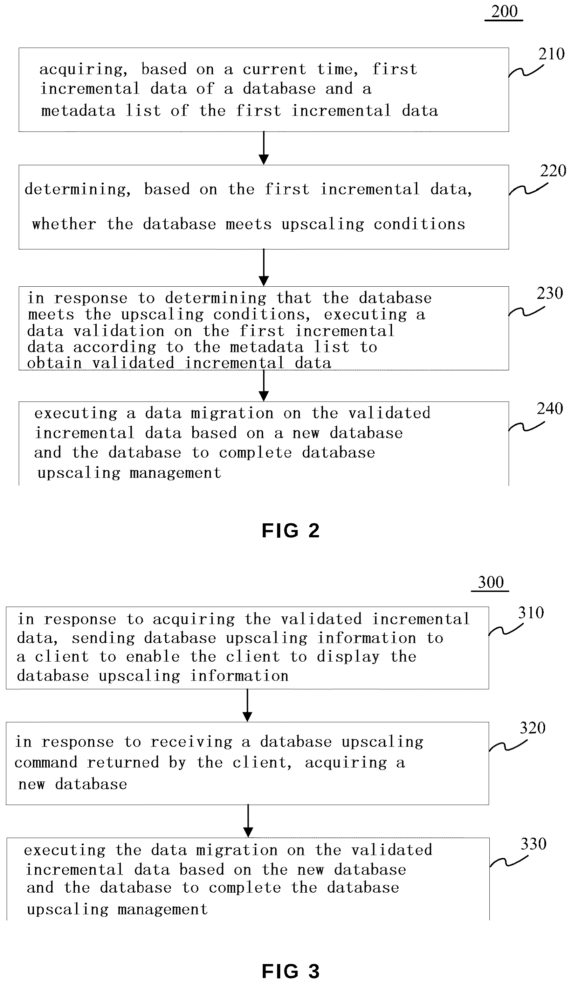

Referring to FIG. 2, FIG. 2 shows a flowchart 200 of a database management method according to an embodiment of the present disclosure. The database management method comprises the following steps:
Step 210: acquiring, based on a current time, first incremental data of a database and a metadata list of the first incremental data.

In this step, the execution entity (e.g., server 105 in FIG. 1) running the database management method can acquire a current time, and acquire data stored in the database after the current time as the first incremental data of the database based on the current time, and acquire the metadata corresponding to the first incremental data while storing the first incremental data in the database. The metadata can represent information of the first incremental data and can include the primary key ID, physical node serial number and other information corresponding to the first incremental data. Then, the above-mentioned execution entity can organize the metadata of the first incremental data into a metadata list, and the metadata list can include metadata corresponding to multiple first incremental data.

As an optional implementation, the step 210 of acquiring, based on the current time, first incremental data of a database and a metadata list of the first incremental data, may comprise the following steps of: determining, based on the current time, whether a data volume of the database exceeds a first threshold; and in response to determining that the data volume of the database exceeds the first threshold, acquiring, based on the current time, the first incremental data corresponding to the database and the metadata list corresponding to the first incremental data,.

Specifically, the execution entity may acquire the current time, and acquire, based on the current time, the data volume corresponding to the database. This data volume may include information indicating the data volume in the database, information indicating database resource utilization, such as CPU usage, and other information indicating the percentage of data in the database. This disclosure does not specifically limit this. The execution entity may compare the data volume of the database with a first threshold to determine whether the database data volume exceeds the first threshold, which may be a value set by operations personnel based on experience, and this disclosure does not specifically limit this.

Upon determination after comparison that the data volume of the database exceeds the first threshold, the execution entity determines that the database requires upscaling, triggers a database pre-upscaling operation by analyzing traffic information from multiple proxy clusters, and selecting a proxy cluster with a lower load from the multiple proxy clusters to perform database upscaling management. After determining the proxy cluster, the execution entity acquires data stored in the database after the current time through the proxy cluster, determines the data as the first incremental data of the database, and acquires metadata corresponding to the first incremental data while storing the first incremental data in the database, and then organizes the metadata of the first incremental data into a metadata list.

In this implementation, by determining the data volume of the database at the current time to determine whether the database upscaling is required, the accuracy of database management is improved. Furthermore, by using the proxy cluster with a lower load to perform upscaling management, the database can maintain normal external services while ensuring upscaling of the database, minimizing traffic impact, and enabling no-perception database upscaling management.

Step 220: determining, based on the first incremental data, whether the database meets upscaling conditions.

In this step, after acquiring the first incremental data, the aforesaid execution entity can acquire the time interval corresponding to the first incremental data. The time interval can be the time period during which the first incremental data remains within the preset data range, which can be the data volume range of the first incremental data set by the operations personnel based on experience. It determines whether the time interval corresponding to the first incremental data exceeds the preset time threshold to determine whether the database meets the upscaling conditions.

If the time interval of the first incremental data exceeds the preset time threshold, which indicates that the first incremental data of the database remains within the preset data range for a period of time, it determines that the database meets the upscaling conditions; if the time interval of the first incremental data does not exceed the preset time threshold, which indicates that the first incremental data of the database fluctuates for a period of time, its determines that the database does not meet the upscaling conditions.

Step 230: in response to determining that the database meets the upscaling conditions, executing the data validation on the first incremental data according to the metadata list to obtain validated incremental data.

In this step, after determining that the database meets the upscaling conditions, the execution entity reads the stored data in the database based on each piece of metadata in the metadata list corresponding to the first incremental data to find whether the stored data corresponding to the metadata exists. This allows the execution entity to execute the data validation on the first incremental data according to the metadata list and the stored data in the database. If the stored data corresponding to the metadata exists, the stored data corresponding to the metadata is determined to be the validated incremental data.

As an optional implementation, the upscaling conditions may include that the data volume of the first incremental data exceeds a second threshold. Furthermore, the step 230 of in response to determining that the database meets the upscaling conditions, executing data validation on the first incremental data according to the metadata list to obtain validated incremental data, may comprise the following steps of: in response to determining that the data volume of the first incremental data exceeds the second threshold, acquiring corresponding target data from stored data in the database according to the metadata list of the first incremental data; and executing the data validation on the target data based on physical node information to obtain the validated incremental data.

Specifically, the execution entity may acquire the data volume corresponding to the first incremental data and determine whether the data volume of the first incremental data exceeds a second threshold, which may be a value set by operations personnel based on experience, to determine whether the database meets the upscaling conditions. Upon determining that the data volume of the first incremental data exceeds the second threshold, the execution entity may read the stored data in the database based on each piece of metadata in the metadata list corresponding to the first incremental data to find whether the stored data corresponding to the metadata exists; if so, it determines the stored data corresponding to the metadata as the corresponding target data. The execution entity may further execute the data validation on the acquired target data based on the physical node information, performing a double check on the target data to determine whether the target data is accurate to obtain the validated incremental data.

In this implementation, by performing two data validations on the first incremental data based on the metadata list and the physical node information respectively, the accuracy of the first incremental data is ensured, thereby improving the accuracy of the data validation and making the validated incremental data more accurate.

Step 240: executing a data migration on the validated incremental data based on a new database and the database to complete database upscaling management.

In this step, after acquiring the validated incremental data, the execution entity can acquire a new database; determine, based on the new database and the existing database, the database to store the validated incremental data; and migrate validated incremental data to complete database upscaling management.

The database management method provided by the embodiment of the present disclosure is as follows: The execution entity first acquires, based on a current time, first incremental data of a database and a metadata list of the first incremental data; then, determines, based on the first incremental data, whether the database meets upscaling conditions; then, in response to determining that the database meets the upscaling conditions, executes a data validation on the first incremental data according to the metadata list to obtain the validated incremental data; and finally, executes a data migration on the validated incremental data based on a new database and the database to complete database upscaling management. When the database meets the upscaling conditions, it can perform the data validation on the first incremental data to improve the accuracy of the incremental data, and the data migration based on the validated incremental data to complete database upscaling management. Second-level upscaling on the first incremental data can be executed, enabling accurate and rapid migration of incremental data without disrupting data storage processes, realizing no-perception database upscaling of the database without database downtime, and improving flexibility and accuracy in database management.

Referring to FIG. 3, FIG. 3 shows a flowchart of an embodiment of the data migration for the validated incremental data. That is, aforesaid step 230 of in response to determining that the database meets the upscaling conditions, executing the data validation on the first incremental data according to the metadata list to obtain the validated incremental data may comprise the following steps of:
Step 310: in response to obtaining the validated incremental data, sending database upscaling information to a client to enable the client to display the database upscaling information.

In this step, the execution entity may generate database upscaling information indicating high data pressure and the need for database upscaling after acquiring the validated incremental data, and send the database upscaling information to the client via alert methods such as email or phone calls to enable the client to display the database upscaling information. Operations personnel review the upscaling information on the client and then input on the client a confirmation operation for database upscaling so that the client generates a database scaling command based on this confirmation operation and sends it to the execution entity.

Step 320: in response to receiving a database upscaling command returned by the client, obtaining a new database.

In this step, the execution entity may acquire a new database based on the database upscaling command returned from the client after receiving it.

Step 330: executing a data migration on the validated incremental data based on the new database and the database to complete database upscaling management.

In this step, after acquiring new data, the execution entity determines the target database to store the validated incremental data based on the new database and the existing database, and executes the data migration on the validated incremental data to complete the database upscaling management.

In this embodiment, by sending the database upscaling information to the client to obtain a new database based on the database upscaling command returned by the client, where requires further confirmation by operations personnel, the security of the database upscaling process is enhanced.

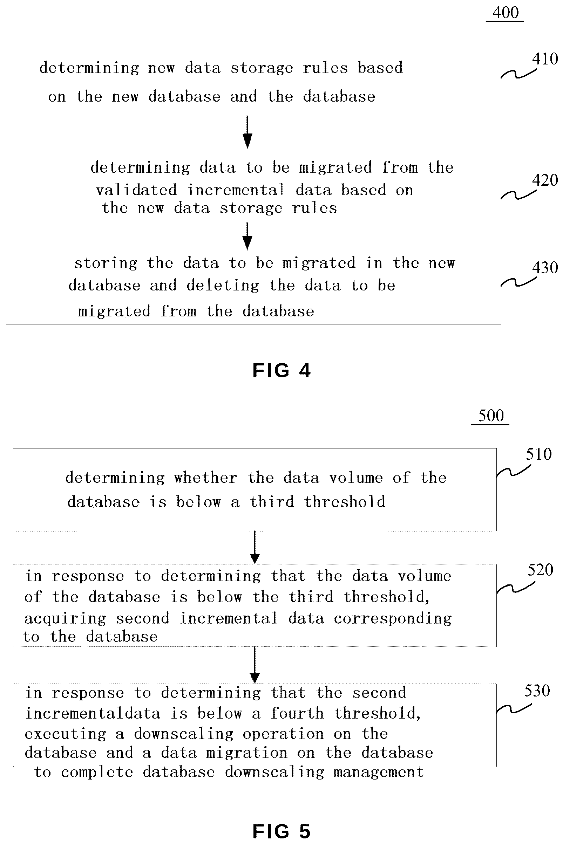

Referring to FIG. 4, FIG. 4 shows a flowchart 400 of an embodiment for completing database upscaling management. That is, aforesaid step 330 of executing the data migration on the validated incremental data based on the new database and the database to complete database upscaling management may comprise the following steps:
Step 410: determining new data storage rules based on the new database and the database.

In the step, after acquiring the new database and the database, the execution entity determines new data storage rules based on multiple databases including the new database and the database. The new storage rules may include: correspondence between data numbers and databases, or Hash algorithms used to determine data storage locations. Previously, when only the database is available, data is stored directly according to the original storage rules. With the addition of the new database, new storage rules must be redefined to ensure data can be stored in the database and the new database.

Step 420: determining data to be migrated from the validated incremental data based on the new data storage rules.

In this step, after determining the new storage rules, the execution entity may execute calculation on the validated incremental data according to the new data storage rules to determine the storage location for each validated incremental data, and determine the data that need be stored in the new database from the validated incremental data as data to be migrated.

Step 430: storing the data to be migrated in the new database and deleting the data to be migrated from the database.

In this step, after determining the data to be migrated, the execution entity may store the data to be migrated into the new database, and once confirmation is made that the data to be migrated has been successfully stored to the new database, delete the data to be migrated from the database.

In this embodiment, by determining new data storage rules based on the new database and the database, the validated incremental data can be stored according to the new storage rules, ensuring data migration and database upscaling without interrupting database services.

As an optional implementation, the aforesaid database management method may further comprise the following steps of: in response to receiving data to be stored, determining from the new database and the database a target database corresponding to the data to be stored based on the new data storage rules; and storing the data to be stored in the target database.

Specifically, the execution entity may continue to receive the data to be stored, which could be data received during the data migration process, or data received after completing database upscaling management. That is, calculation can be made on the data to be stored according to the new data storage rules to determine the target database for the data to be stored, and the data to be stored can be stored in the target database.

In this implementation, by storing the received data to be stored based on the new data storage rules, the data to be stored can be stored in a timely manner, improving the flexibility and timeliness of data storage.

As an optional implementation, the database management method may further comprise the following steps of: executing the data migration on existing data in the database based on the new data storage rules; and in response to determining that the data migration of the existing data in the database has been completed, deleting the existing data based on a current storage location of the existing data.

Specifically, after determining the new data storage rules, the execution entity may perform calculation on the existing data in the database according to the new data storage rules to determine the corresponding storage location of the existing data. Upon determining that a portion of the existing data needs to be stored in the new database, the execution entity may migrate the portion of the existing data to the new database. The execution entity may execute the data migration on the existing data using an asynchronous task, which may limit traffic based on current traffic conditions. Upon confirmation that the migration of the existing data in the database is complete, the execution entity may delete the existing data that has been migrated to the new database to release database resources.

In this implementation, by migrating existing data via asynchronous tasks, which can be throttled based on current traffic conditions, existing services will not be significantly perceived before the asynchronous tasks are completed. This allows for accurate and seamless data migration, enabling no-perception database upscaling.

As an optional implementation, the database management method may further comprise the following steps: in response to receiving a data access request for target data, determining a storage database for the target data; and accessing the target data based on the storage database.

Specifically, if receiving a data access request during the data migration process, the execution entity may obtain a timestamp for the target data and, based on this timestamp, determine the stage at which the target data is stored, thereby to determine a storage database for the target data based on the timestamp. If the storage database for target data is determined to be an existing database, it may send the data access request to the database corresponding to the target data according to the previously established data access rules to access the target data.

If receiving a data access request after completing database upscaling management, the execution entity can determine the storage database for the target data according to the new data access rules. If the storage database for target data is determined to be an existing database, it may send the data access request to the database corresponding to the target data to access the target data. If the storage database for target data is determined to be a new database, it may send the data access request to the database corresponding to the target data to access the target data.

In this implementation, different data access operations can be performed based on data access requests received at different stages, improving the specificity of data access. Furthermore, different data access rules can be used to perform data access based on data access requests received at different stages, improving the accuracy of data access.

Referring to FIG. 5, FIG. 5 shows a flowchart 500 of an embodiment for completing database downscaling management. The database management method may further comprise the following steps of:
Step 510: determining whether the data volume of the database is below a third threshold.

In this step, the execution entity may obtain the data volume corresponding to the database at the current time. This data volume may include information indicating the data volume of data stored in the database, information indicating database resource utilization, such as CPU usage, and other information indicating the percentage of data in the database. This disclosure does not specifically limit this. The execution entity may compare the database data volume with a third threshold to determine whether the database data volume is below a third threshold, which may be a value set by operations personnel based on experience, and this disclosure does not specifically limit this.

Step 520: in response to determining that the data volume of the database is below the third threshold, acquiring second incremental data corresponding to the database.

In this step, if determining that the data volume of the database is below the third threshold, the execution entity may acquire data stored in the database after the current time based on the current time and determine this data as the second incremental data of the database.

Step 530: in response to determining that the second incremental data is below a fourth threshold, executing a downscaling operation on the database and a data migration on the database to complete database downscaling management.

In this step, the execution entity may acquire the data volume corresponding to the second incremental data and determine whether the data volume of the second incremental data is below a fourth threshold, which may be a value set by operations personnel based on experience, to determine whether the database meets the downscaling conditions.

If determining that the data volume of the second incremental data is below the fourth threshold, the execution entity may execute a downscaling operation on the database and a data migration on the database to complete database downscaling management.

In this embodiment, whether the database meets the downscaling conditions is determined based on the data volume of the database, and if the second incremental data is below the fourth threshold and the data volume of the database is determined to be consistently low, the downscaling operation on the database is executed. This improves the accuracy of the database downscaling process, prevents abrupt downscaling, and enhances the user experience.

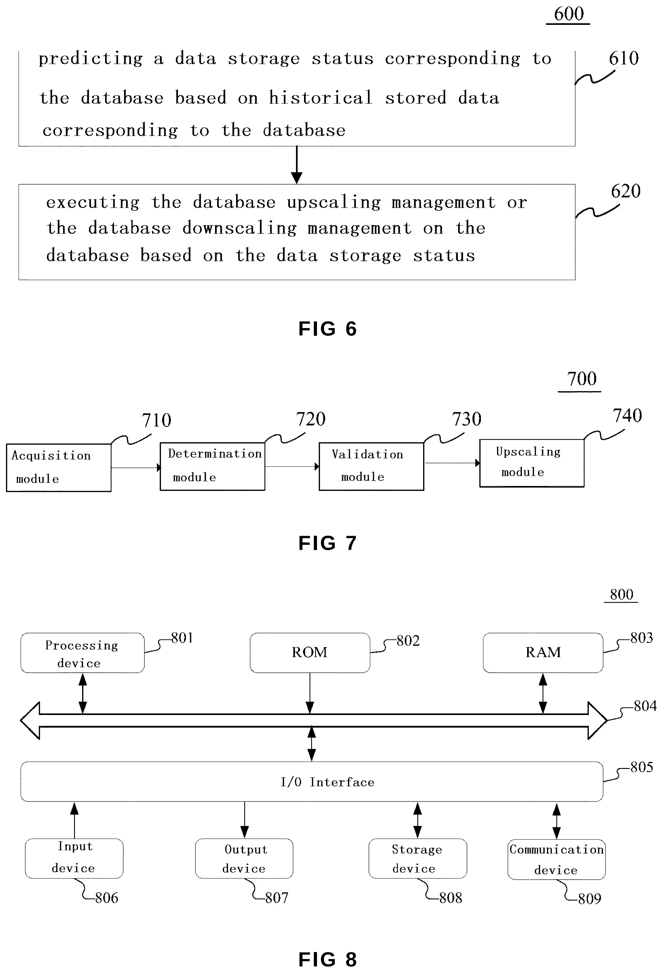

Referring to FIG. 6, FIG. 6 shows a flowchart 600 of an embodiment of database upscaling management or database downscaling management. The database management method may further comprise the following steps:
Step 610: predicting a data storage status corresponding to the database based on historical stored data corresponding to the database.

In this step, the execution entity may acquire the historical stored data corresponding to the database through network access or other means, and execute data analysis on the historical stored data. For example, it establishes a normal distribution model based on the historical stored data to predict the data storage volume at each time point in the database, and determines the data storage volume at each time point in the database as the data storage status corresponding to the database.

Step 620: executing the database upscaling management or the database downscaling management on the database based on the data storage status.

In this step, the execution entity determines the peak data storage volume of the database based on the data storage status of the database, and executes database upscaling management or database downscaling management before that time point based on the time point of the peak data storage volume.

In this embodiment, by predicting the peak data storage volume corresponding to the database based on the historical stored data, and executing database upscaling management or database downscaling management in advance based on the peak value, flexibility and accuracy of database management are enhanced.

Referring to FIG.7, the present disclosure provides an embodiment of a database management apparatus as an implementation of the methods illustrated in the above figures. This apparatus embodiment corresponds to the method embodiment illustrated in FIG. 2.

As shown in FIG.7, database management apparatus 700 of this embodiment may comprise: an acquisition module 710 configured to acquire, based on a current time, first incremental data of a database and a metadata list of the first incremental data; a determination module 720 configured to determine, based on the first incremental data, whether the database meets upscaling conditions; a validation module 730 configured to, in response to determining that the database meets the upscaling conditions, executing a data validation on the first incremental data according to the metadata list to obtain validated incremental data; and an upscaling module 740 configured to execute a data migration on the validated incremental data based on a new database and the database to complete database upscaling management.

In some optional implementations of this embodiment, the acquisition module 710 is further configured to: determine, based on the current time, whether a data volume of the database exceeds a first threshold; and in response to determining that the data volume of the database exceeds the first threshold, acquire the first incremental data corresponding to the database and the metadata list corresponding to the first incremental data, based on the current time.

In some optional implementations of this embodiment, the upscaling conditions include that the data volume of the first incremental data exceeds a second threshold; and the validation module 730 is further configured to: in response to determining that the data volume of the first incremental data exceeds the second threshold, acquire corresponding target data from stored data in the database according to the metadata list of the first incremental data; and execute the data validation on the target data based on physical node information to obtain the validated incremental data.

In some optional implementations of this embodiment, the upscaling module 740 is further configured to: in response to acquiring the validated incremental data, send database upscaling information to a client to enable the client to display the database upscaling information; in response to receiving a database upscaling command returned by the client, acquire a new database; and execute the data migration on the validated incremental data based on the new database and the database to complete the database upscaling management.

In some optional implementations of this embodiment, the upscaling module 740 is further configured to: determine new data storage rules based on the new database and the database; determine data to be migrated from the validated incremental data based on the new data storage rules; and store the data to be migrated in the new database and delete the data to be migrated from the database.

In some optional implementations of this embodiment, the apparatus further comprises: a determination module configured to, in response to receiving the data to be stored, determine from the new database and the database a target database corresponding to the data to be stored based on the new data storage rules; and a storage module configured to store the data to be stored in the target database.

In some optional implementations of this embodiment, the apparatus further comprises: a deletion module configured to execute the data migration on existing data in the database based on the new data storage rules; and in response to determining that the data migration of the existing data in the database has been completed, delete the existing data based on a current storage location of the existing data.

In some optional implementations of this embodiment, the apparatus further comprises: a downscaling module; determination module 720 further configured to determine whether the data volume of the database is below a third threshold; acquisition module 710 further configured to, in response to determining that the data volume of the database is below the third threshold, acquire second incremental data corresponding to the database; and the downscaling module configured to, in response to determining that the second incremental data is below a fourth threshold, execute a downscaling operation on the database and a data migration on the database to complete database downscaling management.

In some optional implementations of this embodiment, the apparatus further comprises: a prediction module configured to predict a data storage status corresponding to the database based on historical stored data corresponding to the database; and execute the database upscaling management or the database downscaling management on the database based on the data storage status.

In the database management apparatus provided by the aforesaid embodiment of the present disclosure, the execution entity first acquire, based on a current time, first incremental data of a database and a metadata list of the first incremental data. Then, it determines, based on the first incremental data, whether the database meets upscaling conditions. Then, in response to determining that the database meets the upscaling conditions, it executes a data validation on the first incremental data according to the metadata list to obtain validated incremental data. Finally, it executes a data migration on the validated incremental data based on a new database and the database to complete database upscaling management. When the database meets the upscaling conditions, it can execute the data validation on the first incremental data to improve the accuracy of the incremental data, and the data migration based on the validated incremental data to complete the database upscaling management. Second-level upscaling on the first incremental data can be executed, enabling accurate and rapid migration of incremental data without disrupting data storage processes, realizing no-perception database upscaling of the database without database downtime, and improving flexibility and accuracy in database management.

Those skilled in the art will appreciate that the aforesaid apparatus also comprises other known structures, such as a processor and memory. Not to obscure the embodiments of the present disclosure, these known structures are not shown in FIG. 7.

It should be noted that in the technical solutions disclosed herein, the collection, gathering, updating, analysis, processing, use, transmission, and storage of user personal information strictly comply with relevant laws and regulations, are used for legitimate purposes, and do not contravene public order and good customs. Necessary measures are taken to prevent unauthorized access to user personal information data, safeguard the security of user personal information, network security, and national security.

Referring to FIG. 8, FIG. 8 shows a schematic diagram of the structure of an electronic device 800 suitable for implementing embodiments of the present disclosure. Terminal devices in embodiments of the present disclosure may comprise, but are not limited to, mobile terminals such as smart screens, laptops, PADs (tablet computers), PMPs (portable multimedia players), and in-vehicle terminals (e.g., in-vehicle navigation terminals), as well as fixed terminals such as digital TVs and desktop computers. The terminal device shown in FIG. 8 is merely an example and should not limit the functionality or scope of use of the embodiments of the present disclosure.

As shown in FIG. 8 , electronic device 800 may comprise processing device (e.g., a central processing unit, graphics processor, etc.) 801, which can perform various appropriate actions and processes based on programs stored in read-only memory (ROM) 802 or programs loaded from storage device 808 into random access memory (RAM) 803. RAM 803 also stores various programs and data required for the operation of electronic device 800. Processing device 801, ROM 802, and RAM 803 are interconnected via bus 804. Input/output (I/O) interface 805 is also connected to bus 804.

Typically, the following devices may be connected to I/O interface 805: input device 806, such as a touchscreen, touchpad, keyboard, mouse, camera, microphone, accelerometer, gyroscope, etc.; output device 807, such as a liquid crystal display (LCD), speaker, vibrator, etc.; storage device 808, such as a magnetic tape, hard disk, etc.; and communication device 809. Communication device 809 may allow electronic device 800 to communicate with other devices wirelessly or wired to exchange data. Although FIG.8 shows electronic device 800 with various devices, it should be understood that not all of the devices shown are required to be implemented or present. More or fewer devices may alternatively be implemented or present. Each block shown in FIG.8 may represent one device, or may represent multiple devices as needed.

In particular, according to embodiments of the present disclosure, the processes described above with reference to the flowcharts may be implemented as computer software programs. For example, an embodiment of the present disclosure includes a computer program product comprising a computer program carried on a computer-readable medium, the computer program containing program codes for executing the method shown in the flowchart. In such an embodiment, the computer program can be downloaded and installed from a network via communication device 809, or installed from storage device 808, or installed from ROM 802. When the computer program is executed by processing device 801, the functions defined in the method of the embodiment of the present disclosure are performed. It should be noted that the computer-readable medium of the embodiment of the present disclosure can be a computer-readable signal medium or a computer-readable storage medium, or any combination thereof. The computer-readable storage medium can be, for example, but not limited to, an electrical, magnetic, optical, electromagnetic, infrared, or semiconductor system, device, or any combination thereof. More specific examples of computer-readable storage media may include, but are not limited to, an electrical connection having one or more conductors, a portable computer disk, a hard disk, random access memory (RAM), read-only memory (ROM), erasable programmable read-only memory (EPROM or flash memory), optical fiber, a portable compact disk read-only memory (CD-ROM), an optical storage device, a magnetic storage device, or any suitable combination of the foregoing. In embodiments of the present disclosure, a computer-readable storage medium may be any tangible medium containing or storing a program that can be used by or in conjunction with an instruction execution system, apparatus, or device. Furthermore, in embodiments of the present disclosure, a computer-readable signal medium may include a data signal propagated in baseband or as part of a carrier wave, carrying computer-readable program code. Such a propagated data signal may take a variety of forms, including, but not limited to, an electromagnetic signal, an optical signal, or any suitable combination of the foregoing. A computer-readable signal medium may also be any computer-readable medium other than a computer-readable storage medium that can transmit, propagate, or transfer a program for use by or in conjunction with an instruction execution system, apparatus, or device. Program code embodied on a computer-readable medium may be transmitted using any appropriate medium, including, but not limited to, wire, fiber optic cable, RF (radio frequency), or any suitable combination thereof.

Computer program code for performing operations according to embodiments of the present disclosure may be written in one or more programming languages, or a combination thereof, including object-oriented programming languages such as Java, Smalltalk, and C++, as well as conventional procedural programming languages such as C or similar programming languages. The program code may execute entirely on the user's computer, partially on the user's computer, as a stand-alone software package, partially on the user's computer and partially on a remote computer, or entirely on a remote computer or server. In the case of a remote computer, the remote computer may be connected to the user's computer via any type of network, including a local area network (LAN) or a wide area network (WAN), or may be connected to an external computer (e.g., via the Internet using an Internet service provider).

The flowcharts and block diagrams in the accompanying figures illustrate the architecture, functionality, and operation of possible implementations of systems, methods, and computer program products according to various embodiments of the present disclosure. In this regard, each block in a flowchart or block diagram may represent a module, program segment, or portion of code, which contains one or more executable instructions for implementing a specified logical function. It should also be noted that in some alternative implementations, the functions indicated in the blocks may occur in a different order than indicated in the accompanying figures. For example, two blocks shown consecutively may actually be executed substantially in parallel, or they may sometimes be executed in the opposite order, depending on the functions involved. It should also be noted that each block in a block diagram and/or flowchart, as well as combinations of blocks in the block diagram and/or flowchart, may be implemented using a dedicated hardware-based system that performs the specified function or operation, or may be implemented using a combination of dedicated hardware and computer instructions.

The units described in the embodiments of this disclosure may be implemented in software or hardware. The described units may also be provided in a processor. For example, a processor may be described as comprising an acquisition module, a determination module, a validation module, and an upscaling module. The names of these modules do not, in some cases, limit the modules themselves.

As another aspect, the present disclosure further provides a computer-readable medium. The computer-readable medium may be included in the electronic device or may exist independently and not incorporated into the electronic device. The computer-readable medium carries one or more programs. When executed by the electronic device, the one or more programs cause the electronic device to: acquire, based on a current time, first incremental data of a database and a metadata list of the first incremental data; determine, based on the first incremental data, whether the database meets upscaling conditions; in response to determining that the database meets the upscaling conditions, execute a data validation on the first incremental data according to the metadata list to obtain validated incremental data; and execute a data migration on the validated incremental data based on a new database and the database to complete database upscaling management.

The above description is merely an illustration of preferred embodiments of the present disclosure and the underlying technical principles. Those skilled in the art should understand that the scope of the invention described in the embodiments of the present disclosure is not limited to technical solutions formed by specific combinations of the aforementioned technical features, but also encompasses other technical solutions formed by any combination of the aforementioned technical features or their equivalents without departing from the aforementioned inventive concept. For example, the above features are replaced with (but not limited to) technical features with similar functions disclosed in the embodiments of this disclosure by each other to form a technical solution.

## Claims

1. A database management method, comprising:
acquiring, based on a current time, first incremental data of a database and a metadata list of the first incremental data;
determining, based on the first incremental data, whether the database meets upscaling conditions;
in response to determining that the database meets the upscaling conditions, executing a data validation on the first incremental data according to the metadata list to obtain validated incremental data; and
executing a data migration on the validated incremental data based on a new database and the database to complete database upscaling management.

2. The method according to claim 1, wherein the acquiring, based on the current time, the first incremental data of the database and the metadata list of the first incremental data comprises:
determining, based on the current time, whether a data volume of the database exceeds a first threshold; and
in response to determining that the data volume of the database exceeds the first threshold, acquiring the first incremental data corresponding to the database and the metadata list corresponding to the first incremental data, based on the current time.

3. The method according to claim 1, wherein the upscaling conditions include that the data volume of the first incremental data exceeds a second threshold; and
the in response to determining that the database meets the upscaling conditions, executing the data validation on the first incremental data according to the metadata list to obtain the validated incremental data, comprises:
in response to determining that the data volume of the first incremental data exceeds the second threshold, acquiring corresponding target data from stored data in the database according to the metadata list of the first incremental data; and
executing the data validation on the target data based on physical node information to obtain the validated incremental data.

4. The method according to claim 1, wherein the executing the data migration on the validated incremental data based on the new database and the database to complete the database upscaling management comprises:
in response to acquiring the validated incremental data, sending database upscaling information to a client to enable the client to display the database upscaling information;
in response to receiving a database upscaling command returned by the client, acquiring a new database; and
executing the data migration on the validated incremental data based on the new database and the database to complete the database upscaling management.

5. The method according to claim 4, wherein the executing the data migration on the validated incremental data based on the new database and the database to complete the database upscaling management comprises:
determining new data storage rules based on the new database and the database;
determining data to be migrated from the validated incremental data based on the new data storage rules; and
storing the data to be migrated in the new database and deleting the data to be migrated from the database.

6. The method according to claim 5, further comprising:
in response to receiving the data to be stored, determining from the new database and the database a target database corresponding to the data to be stored based on the new data storage rules; and
storing the data to be stored in the target database.

7. The method according to any one of claims 5 or 6, further comprising:
executing the data migration on existing data in the database based on the new data storage rules; and
in response to determining that the data migration of the existing data in the database has been completed, deleting the existing data based on a current storage location of the existing data.

8. The method according to any one of claims 1-6, further comprising:
determining whether the data volume of the database is below a third threshold;
in response to determining that the data volume of the database is below the third threshold, acquiring second incremental data corresponding to the database; and
in response to determining that the second incremental data is below a fourth threshold, executing a downscaling operation on the database and a data migration on the database to complete database downscaling management.

9. The method according to claim 8, further comprising:
predicting a data storage status corresponding to the database based on historical stored data corresponding to the database; and
executing the database upscaling management or the database downscaling management on the database based on the data storage status.

10. A database management apparatus, comprising:
an acquisition module configured to acquire, based on a current time, first incremental data of a database and a metadata list of the first incremental data;
a determination module configured to determine, based on the first incremental data, whether the database meets upscaling conditions;
a validation module configured to, in response to determining that the database meets the upscaling conditions, executing a data validation on the first incremental data according to the metadata list to obtain validated incremental data; and
an upscaling module configured to execute a data migration on the validated incremental data based on a new database and the database to complete database upscaling management.

11. The apparatus according to claim 10, further comprising a downscaling module, wherein
the determination module is further configured to determine whether a data volume of the database is below a third threshold;
the acquisition module is further configured to, in response to determining that the data volume of the database is below the third threshold, acquire second incremental data corresponding to the database; and
the downscaling module is configured to, in response to determining that the second incremental data is below a fourth threshold, execute a downscaling operation on the database and a data migration on the database to complete database downscaling management.

12. An electronic device comprising:
one or more processors; and
a storage device for storing one or more programs,
when executed by the one or more processors, the one or more programs cause the one or more processors to implement the method according to any one of claims 1-9.

13. A non-transitory computer-readable medium storing a computer program, the computer program, when executed by a processor, implements the method according to any one of claims 1-9.

14. A computer program product comprising a computer program, the computer program, when executed by a processor, implements the method according to any one of claims 1-9.
